# EUROPÄISCHE PATENTSCHRIFT

(11) **EP 4 086 543 B1**
(45) Veröffentlichungstag und Bekanntmachung des Hinweises auf die Patenterteilung: **09.04.2025**
(21) Anmeldenummer: 22168074.7
(22) Anmeldetag: 13.04.2022
(51) Int. Cl.: F25D 3/12, C01B 32/55, B01D 7/02, A23L 3/375

(54) **VORRICHTUNG ZUM DOSIEREN VON KOHLENDIOXIDSCHNEE**
DEVICE FOR METERING OF CARBON DIOXIDE SNOW
DISPOSITIF DE DOSAGE DE NEIGE CARBONIQUE

(30) Priorität: 03.05.2021 DE 102021002056
(43) Veröffentlichungstag der Anmeldung: 09.11.2022
(73) Patentinhaber: Messer SE & Co. KGaA, 65812 Bad Soden (DE)
(72) Erfinder: Claeys, Jean-Claude, 2070 Zwijndrecht (BE); Gockel, Frank, 42553 Velbert (DE); Vu Thi, Mai, 06390 Contes (FR)

(56) Entgegenhaltungen:
- EP-A1- 0 792 837
- EP-A1- 1 577 262
- JP-U- S5 787 028
- US-A- 2 893 216
- US-A- 3 492 829

## Beschreibung

Die Erfindung betrifft eine Vorrichtung zum Dosieren von Kohlendioxidschnee, mit einem Schneehorn, das eine nach oben geschlossene und unterseitig an einer Mündungsöffnung des Schneehorns ausmündende Entspannungskammer und eine im Inneren der Entspannungskammer ausmündende, an eine Zuleitung für flüssiges Kohlendioxid angeschlossene Entspannungsdüse umfasst.

Um eine hohe Produktqualität zu gewährleisten ist es in vielen Fällen erforderlich, temperaturempfindliche Produkte, insbesondere Lebensmittel, pharmazeutische Produkte, biologische oder medizinische Proben nach ihrer Herstellung sehr rasch auf Lagertemperatur abzukühlen. Hierbei besteht insbesondere bei kleinvolumigen Produkten, wie beispielsweise Gewebeproben oder kleine, stückige Lebensmittel, die Herausforderung, einerseits eine hinreichende Kühlung sicherzustellen, andererseits das Produkt nicht durch eine Übermenge an Kühlmittel zu unterkühlen. In anderen Fällen ist es notwendig, die Oberfläche eines Produkts durch Krustieren zu härten. Durch die Beaufschlagung mit einem kryogenen Medium wie Flüssigstickstoff oder Kohlendioxidschnee wird dabei die Produktoberfläche rasch angefroren und so verfestigt, wodurch es möglich ist, die Form oder die äußeren Abmessungen des Produkts für die Weiterverarbeitung zu stabilisieren.

Hierzu ist es bekannt, die Oberfläche eines Produktes, insbesondere eines Lebensmittelprodukts, mit einem Strom aus Kohlendioxidpartikeln zu beaufschlagen, der in einem Schneehorn der eingangs genannten Art erzeugt wird. Ein Schneehorn umfasst eine Entspannungsdüse, die in eine im geodätischen Sinne nach unten offene, meist zylinderförmige oder konisch sich aufweitende Entspannungskammer einmündet. Flüssiges Kohlendioxid wird unter Druck herangeführt und an der Entspannungsdüse entspannt. Bei der Entspannung entsteht ein Gemisch aus gasförmigem Kohlendioxid und Kohlendioxidschnee, das unter der Wirkung der Schwerkraft aus auf ein unterhalb der Mündungsöffnung der Entspannungskammer angeordnetes Produkt fällt. Derartige Systeme werden beispielsweise in der US 4 652 287 A oder der DE 198 52 185 A1 beschrieben. Sie haben jedoch den Nachteil, dass aufgrund der Gasentwicklung bei der Entspannung des flüssigen Kohlendioxids ein starker, turbulenter Gasstrom entsteht, der den auf die Produktoberfläche aufgetragenen Kohlendioxidschnee sogleich wieder zumindest teilweise wegbläst. Dadurch wird die Effizienz und Zuverlässigkeit des Verfahrens erheblich gemindert. Es wurden bereits verschiedene Ansätze verfolgt, um das Problem der turbulenten Gasströmung abzumildern. Beispielsweise beschreibt die WO 2007/012636 A1 ein Schneehorn, dessen unterer Abschnitt aus einem gasdurchlässigen Material gefertigt ist, durch welches das Kohlendioxidgas, nicht jedoch der Schneeanteil entweichen kann. In der EP 2 363 377 A1 wird vorgeschlagen, das erzeugte Schnee-GasGemisch gegen eine in der Entspannungskammer angeordnete Förderschnecke zu schleudern, an der es sich separiert. Das Gas wird anschließend über eine Abgasleitung abgeführt, während der Schnee mittels der Förderschnecke zum Bestimmungsort transportiert wird. Bei diesen Gegenständen besteht jedoch die Gefahr, dass durch an Teilen der Apparatur anbackenden Kohlendioxidschnee oder eindringende Luftfeuchtigkeit, die zur Bildung von Wassereis führen kann, die Funktionsfähigkeit der Apparatur beeinträchtigt wird. Zudem sind sie zur Dosierung kleiner Mengen an Kohlendioxidschnee nur bedingt geeignet. Bei dem in EP 2 363 377 A1 beschriebenen System kommt hinzu, dass der zusätzliche Betrieb einer motorisch angetriebenen Förderschnecke die Effizienz des Systems insgesamt reduziert.

Aus der US 4 415 346 A und der EP 1 076 798 A1 sind Anordnungen zum Erzeugen von Kohlendioxidschnee bekannt, bei denen ein Schneehorn innerhalb eines Außenrohrs angeordnet sind, das an eine Absaugeinrichtung zum Entfernen des Kohlendioxidgases angeschlossen ist. Nachteilig ist dabei jedoch, dass ein nicht unbeträchtlicher Teil des entstehenden Kohlendioxidschnees zusammen mit dem Gas abgesaugt wird und für die Kühlaufgabe verloren geht. Weitere Anordnungen zum Erzeugen von Kohlendioxidschnee sind bekannt aus EP 1 577 262 A1 und US 3 492 829 A.

Die Aufgabe der Erfindung besteht also darin, eine Vorrichtung zum Dosieren von Kohlendioxidschnee zu schaffen, die eine genaue und gleichbleibende Menge an Kohlendioxidschnee liefern kann, einfach im Aufbau und in der Handhabung ist und sich flexibel an unterschiedliche Anforderungen anpassen lässt.

Gelöst ist diese Aufgabe durch eine Vorrichtung mit den Merkmalen des Patenanspruchs 1. Vorteilhafte Ausgestaltungen der Erfindung sind in den Unteransprüchen angegeben.

Eine erfindungsgemäße Vorrichtung der eingangs genannten Art und Zweckbestimmung ist also dadurch gekennzeichnet, dass das Schneehorn innerhalb eines nach oben geschlossenen Mantelrohrs aufgenommen ist, das gegenüber der Mündungsöffnung des Schneehorns nach unten vorsteht und einen sich zu einer unterseitigen Austrittsöffnung des Mantelrohrs verjüngenden Mündungstrichter aufweist.

Eine erfindungsgemäße Vorrichtung zum Dosieren von Kohlendioxidschnee umfasst also ein vertikal angeordnetes Schneehorn, das eine - geodätisch gesehen - nach oben geschlossene und unterseitig an einer Mündungsöffnung des Schneehorns ausmündende Entspannungskammer aufweist. Die Entspannungskammer kann dabei kreisförmigen oder eckigen, insbesondere viereckigen Querschnitt aufweisen und in seiner Längserstreckung zylindrisch, glockenförmig oder konisch ausgebildet sein. Im Inneren der Entspannungskammer, bevorzugt an der geschlossenen Oberseite der Entspannungskammer, ist eine an eine Zuleitung für flüssiges Kohlendioxid angeschlossene Entspannungsdüse angeordnet.

Weiterhin ist das Schneehorn innerhalb eines gleichfalls vertikal angeordneten Mantelrohrs angeordnet, das gleichfalls an seiner Oberseite geschlossen ist und eine nach unten ausmündende Austrittsöffnung aufweist. Das Mantelrohr, das im Übrigen runden oder eckigen Querschnitt haben kann, steht unterseitig gegenüber der Mündungsöffnung des Schneehorns in Längsrichtung vor, sodass zwischen der Mündungsöffnung des Schneehorns und der Austrittsöffnung des Mantelrohrs ein vertikaler Abstand besteht. In diesem Bereich ist das Mantelrohr zudem mit einem sich zur Austrittsöffnung hin, beispielsweise konisch, verjüngenden Mündungstrichter ausgerüstet.

Das Schneehorn ist dabei derart im Mantelrohr aufgenommen, dass sich zwischen der Innenwand des Mantelrohrs und der Außenwand der Entspannungskammer des Schneehorns in horizontaler Hinsicht allseits ein Abstand besteht, sodass das Schneehorn in einem mit der Mündungsöffnung des Schneehorns strömungsverbundenen Hohlraum aufgenommen ist. Beispielsweise besitzen Schneehorn und Mantelrohr kreisförmigen Querschnitt und das Schneehorn ist koaxial innerhalb des Mantelrohrs aufgenommen, wobei auf der Höhe der Mündungsöffnung des Schneehorns ein Ringspalt besteht.

Das um das Schneehorn herum angeordnete Mantelrohr erfüllt erfindungsgemäß drei Funktionen. Zum einen dient der Hohlraum (Mantelraum) zwischen der Innenwand des Mantelrohrs und der Außenwand der Entspannungskammer des Schneehorns als Puffervolumen, das zumindest einen Teil des bei der Entspannung von flüssigem Kohlendioxid an der Entspannungsdüse entstehenden Kohlendioxidgases vorübergehend aufnimmt und somit den durch den Mündungstrichter des Mantelrohrs dringenden Gasstrom reduziert. Der erzeugte Kohlendioxidschnee fällt somit unter der Wirkung der Schwerkraft gleichmäßig auf ein unterhalb der Austrittsöffnung des Mantelrohrs angeordnetes Produkt und wird nicht, oder zur zu einem geringen Teil, vom Strom des Kohlendioxidgases mitgerissen. Da der Mantelraum nach oben geschlossen ist, gehen etwaig in den Mantelraum eingetragene Schneepartikel nicht verloren, sondern fallen nach einer kurzen Zeit der Verwirbelung im Mantelraum ebenfalls auf die Produktoberfläche hinab.

Zum Zweiten dient das Mantelrohr der thermischen Isolierung des Schneehorns, da das kurzzeitig in den Mantelraum eindringende kalte Kohlendioxidgas Umgebungswärme zuverlässig von der Wand der Entspannungskammer abschirmt. Dadurch können im Schneehorn auch kleine Mengen an Kohlendioxidschnee erzeugt werden, ohne dass die Gefahr besteht, dass der Kohlendioxidschnee auf dem Weg zur Austrittsöffnung des Mantelrohrs größtenteils sublimiert.

Zum dritten verhindert der gegenüber der Mündungsöffnung des Schneehorns nach unten vorstehende Mündungstrichter des Mantelrohrs während des Betriebs der erfindungsgemäßen Vorrichtung das Eindringen von Umgebungsfeuchtigkeit.

Damit der Mantelraum seine Funktion als Puffervolumen gut erfüllen kann, sollte das Volumen des Mantelraums, abzüglich des vom Schneehorn im Mantelraum ausgefüllten Volumens, mindestens das Zweifache, bevorzugt mindestens das Dreifache des Volumens der Entspannungskammer des Schneehorns betragen. Sind beispielsweise Mantelrohr und Schneehorn zylindrisch aufgebaut, sollte das koaxial zum Schneehorn angeordnete Mantelrohr einen Innendurchmesser aufweisen, der dem 1,4 bis 3-fache des Innendurchmessers der Entspannungskammer des Schneehorns entspricht.

Bevorzugt ist der Öffnungsquerschnitt der Austrittsöffnung des Mantelrohrs am unteren Ende des Mündungstrichters gleich oder kleiner als der Öffnungsquerschnitt der Mündungsöffnung des Schneehorns. Dadurch wird das Eindringen von Umgebungsfeuchtigkeit in das Mantelrohr während des laufenden Betriebes besonders zuverlässig vermieden.

Um eine genaue Erfassung der erzeugten Schneemenge und, bei aufeinanderfolgenden Einsätzen, eine zuverlässig gleichbleibende Abgabemenge zu ermöglichen, erweist es sich als vorteilhaft, dass der Entspannungsdüse ein Phasenseparator vorgeschaltet ist. Im Phasenseparator wird eine etwaig im flüssigen Kohlendioxid enthaltene Gasphase zumindest weitgehend abgetrennt.

In einer zweckmäßigen Ausgestaltung weist die erfindungsgemäße Vorrichtung eine Absaugeinrichtung für Kohlendioxidgas auf, die bevorzugt unterhalb der Austrittsöffnung des Mantelrohrs angeordnet ist. Beispielswiese ist die Absaugeinrichtung unterhalb einer Transporteinrichtung angeordnet, mittels der zu kühlende Produkte oder zu füllende Behälter unter der Austrittsöffnung vorbeigeführt und mit Kohlendioxidschnee beaufschlagt bzw. gefüllt werden, und führt das aus der Austrittsöffnung des Mantelrohrs austretende Kohlendioxidgas ab. Das Kohlendioxidgas umströmt somit die Produkte oder Behälter auf seinem Weg zur Absaugvorrichtung und sorgt so für einen zusätzlichen Kühleffekt. Außerdem kann das abgesaugte Kohlendioxidgas z. B. zur Vorkühlung der zu kühlenden Produkte oder zur Vorkühlung des dem Schneehorn zugeführten flüssigen Kohlendioxids verwendet werden. Bei Vorrichtungen, in denen während des Betriebs nur geringe Mengen an Schnee erzeugt werden sollen und somit nur wenig Kohlendoxidgas entsteht, kann eine Absaugeinrichtung jedoch auch entfallen, sofern dies sicherheitstechnisch verantwortbar ist.

Die erfindungsgemäße Vorrichtung ermöglicht insbesondere die genau Dosierung und Platzierung selbst kleiner CO₂-Schneemengen von beispielsweise zwischen 0,5g und 10g auf Produktoberflächen oder in Behälter. Dementsprechend ist es auch möglich, klein dimensionierte Entspannungsdüsen zum Entspannen des flüssigen Kohlendioxids einzusetzen, die beispielsweise Düsenöffnungen mit Durchmesser von unter 5 mm, beispielsweise 0,4 mm bis 4,5 mm aufweisen. Darüber hinaus ermöglicht die Erfindung, eine zuverlässig gleichbleibende Menge an Kohlendioxidschnee in rascher Taktfolge nacheinander auf Produktoberflächen oder in Behälter abzugeben.

Eine bevorzugte Verwendung der erfindungsgemäßen Vorrichtung besteht im Frosten von Produkten und/oder dem Anfrieren von Produktoberflächen (Krustieren), beispielsweise von Lebensmittelprodukten, pharmazeutischen Produkten oder medizinischen oder biologischen Proben.

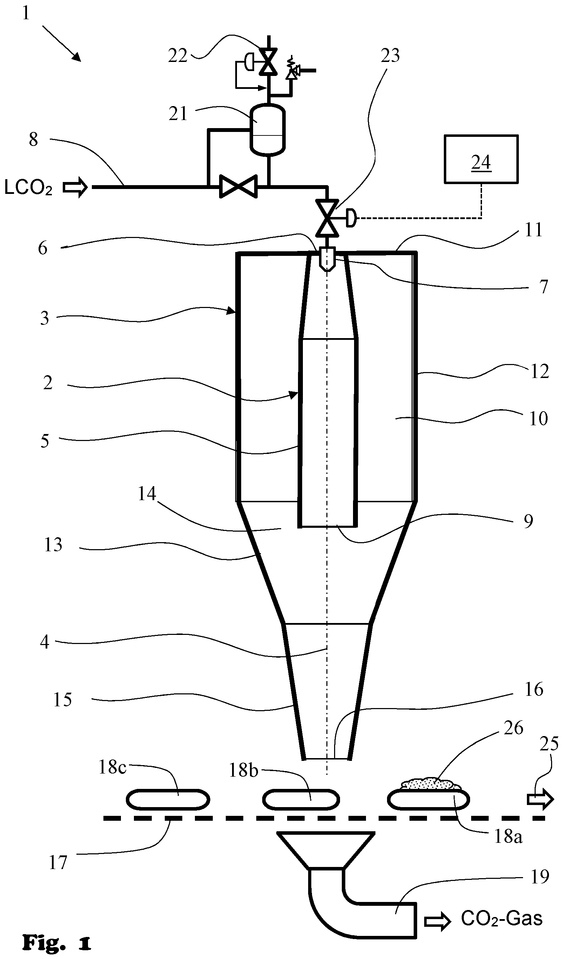

Anhand der Zeichnung soll ein Ausführungsbeispiel der Erfindung näher erläutert werden. Die einzige Zeichnung (Fig. 1) zeigt schematisch eine erfindungsgemäße Vorrichtung im Längsschnitt.

Die in Fig. 1 gezeigte Vorrichtung 1 umfasst ein Schneehorn 2, das innerhalb eines Mantelrohrs 3 angeordnet ist. Schneehorn 2 und Mantelrohr 3 sind im hier gezeigten Ausführungsbeispiel um eine Längsachse 4 der Vorrichtung 1 radialsymmetrisch ausgebildet, wobei das Schneehorn 2 koaxial innerhalb des Mantelrohrs 3 angeordnet ist. Im Übrigen sind jedoch auch andere Querschnitte, beispielsweise rechteckige oder quadratische Querschnitte, für das Schneehorn 2 und/oder das Mantelrohr 3 im Rahmen der Erfindung möglich.

Das Schneehorn 2 umfasst in an sich bekannter Weise eine im geodätischen Sinne vertikal angeordnete, im wesentlichen zylindrische Entspannungskammer 5, an deren oberer Stirnfläche 6 eine Entspannungsdüse 7 einmündet. Die Entspannungsdüse 7 ist an eine druckfeste Kohlendioxidzuleitung 8 angeschlossen, die wiederum an eine hier nicht gezeigte Quelle für flüssiges Kohlendioxid, beispielsweise ein Tank, angeschlossen ist. Während die Entspannungskammer 5 an ihrer oberen Stirnfläche 6 gasdicht abgeschlossen ist und lediglich eine gleichfalls gasdicht ausgebildete Durchführung für die Entspannungsdüse 7 aufweist, weist sie an ihrer unteren Stirnfläche eine Mündungsöffnung 9 auf, die sich über die gesamte Querschnittsfläche der Entspannungskammer 5 erstreckt.

Das unter Ausbildung eines Mantelraums 10 radial beabstandet von Schneehorn 2 angeordnete Mantelrohr 3 ist an seiner oberen Stirnfläche 11 gleichfalls gasdicht abgeschlossen und weist lediglich eine gleichfalls gasdicht ausgebildete Durchführung für das Schneehorn 2 auf. Im hier gezeigten Ausführungsbeispiel schließen die oberen Stirnflächen 6, 11 von Schneehorn 2 und Mantelrohr 3 bündig miteinander ab, es ist jedoch auch vorstellbar, dass die obere Stirnfläche 11 des Mantelrohrs 3 vertikal beabstandet oberhalb der oberen Stirnfläche 6 des Schneehorns 2 angeordnet ist; in diesem Falle beschränkt sich die gasdichte Durchführung auf eine Durchführung für die Entspannungsdüse 7 bzw. für die Kohlendioxidzuleitung 8.

Das in seinem oberen Abschnitt 12 zylindrisch ausgebildete Mantelrohr 3 geht etwa auf Höhe der Mündungsöffnung 9 des Schneehorns 2 in einen konischen, sich nach unten verjüngenden Mündungstrichter 13 über, wobei zwischen Mündungstrichter 13 und Entspannungskammer 5 ein Ringspalt 14 offenbleibt. Am unteren Ende des Mündungstrichters 13 ist eine Austrittsmaske 15 lösbar befestigt. Die im hier gezeigten Ausführungsbeispiel gleichfalls konische, sich nach unten verjüngende Austrittsmaske 15 öffnet sich unterseitig zu einer Austrittsöffnung 16 des Mantelrohrs 3. Mit Ausnahme der Austrittsöffnung 16 ist das Mantelrohr 3 geschlossen und kann außenseitig mit einer thermischen Isolierung ausgestattet sein.

Entsprechend der Größe und der Oberflächenbeschaffenheit der jeweils zu kühlenden Produkte kann die Austrittsmaske 15 ausgetauscht und durch eine, einem anderen Produkt oder einer anderen Produktserie angepasste Austrittsmaske ersetzt werden. Insbesondere können so Austrittsmasken mit unterschiedlichen Flächen oder Querschnitten der Austrittsöffnung 16 an der gleichen Vorrichtung 1 zum Einsatz kommen.

Unterhalb der Austrittsöffnung 16 des Mantelrohrs 3 befindet sich der Arbeitsbereich, in dem ein zu kühlendes Produkt oder eine Mehrzahl an zu kühlenden Produkten mit Kohlendioxidschnee beaufschlagt werden soll/sollen. Im hier gezeigten Ausführungsbeispiel ist unterhalb der Austrittsöffnung 16 eine Transporteinrichtung 17, beispielsweise ein Förderband, vorgesehen, mittels der zu kühlende Produkte 18a, 18b, 18c nacheinander unter der Austrittsöffnung 16 transportiert werden. Unterhalb der Transporteinrichtung 17 ist eine Absaugeinrichtung 19 zum Absaugen des bei der Erzeugung des Kohlendioxidschnees entstehenden Kohlendioxidgases angeordnet.

In der Kohlendioxidzuleitung 8 ist ein Phasenseparator 21 angeordnet, der zum Abtrennen von etwaig im zugeführten flüssigen Kohlendioxid befindlichen Gasbestandteilen dient. Der Phasenseparator 21 ist mit einem Druckhalteventil 22 ausgerüstet, das den Betrieb der Vorrichtung 1 unter vorgegebenen Druckbedingungen gewährleistet. Insbesondere dient es dazu, den Druck in der Kohlendioxidzuleitung 8 auf einen Arbeitsdruck oberhalb des Tripelpunktdrucks von 5,18 bar zu halten. Weiterhin ist in der Kohlendioxidzuleitung 8 ein Magnetventil 23 angeordnet, das mittels einer elektronischen Steuerung 24 angesteuert werden kann. Um Totraum zu vermeiden, in dem sich während Betriebspausen Kohlendioxidschnee ansammeln und so die Funktionsfähigkeit der Vorrichtung 1 beeinträchtigen kann, ist das Magnetventil 23 unmittelbar stromauf zur Entspannungsdüse 7 angeordnet. Wenn es das Ziel ist, sehr kleine Schneemengen zu erzeugen, sollte die Öffnung der Expansionsdüse 7 zudem einen kleinen Durchmesser haben, um die Bildung von Schnee im Inneren der Expansionsdüse 7 zu vermeiden.

Im Betrieb der Vorrichtung 1 werden die zu kühlenden Produkte 18a, 18b, 18c mittels der Transporteinrichtung 17 nacheinander in Richtung des Pfeils 25 unter die Austrittsöffnung 16 geführt. In der Kohlendioxidzuleitung 8 liegt flüssiges Kohlendioxid bei einem Arbeitsdruck von über 5,18 bar vor, beispielsweise bei einem Druck von 7 bar bis 20 bar. Entsprechend einem von der Steuerung 24 abgegebenen Steuersignal wird das Magnetventil 23 für eine kurze Zeitdauer von beispielsweise 1 bis 2 Sekunden geöffnet. Nach Durchlaufen den Phasenseparators 21 strömt das flüssige Kohlendioxid zur Entspannungsdüse 7, an der es unter Bildung eines Gemischs aus Kohlendioxidschnee und Kohlendioxidgas entspannt. Ein Teil des entstehenden Kohlendioxidgases strömt über den Ringspalt 14 in den Mantelraum 10 ein und reduziert dadurch den in Richtung der Austrittsöffnung 16 drängenden Gasstrom. Gleichzeitig führt es zu einer thermischen Abschirmung des Schneehorns 2 vor Wärme aus der Umgebung. Der bei der Entspannung entstehende Kohlendioxidschnee fällt gleichmäßig auf ein zu kühlendes Produkt 18a, 18b, 18c hinab und kann dabei sehr genau dosiert werden.

Beispielsweise beträgt die Zeitdauer der Öffnung des Magnetventils 2s. In dieser Zeit hat sich im Schneehorn 2 eine Menge von beispielsweise 10g Kohlendioxidschnee gebildet, der auf die Oberfläche des Produkts 18a fällt und dort eine Schneeschicht 26 ausbildet. Das mit der Schneeschicht 26 bedeckte Produkt 18a wird anschließend aus dem Arbeitsbereich transportiert und durch ein nachfolgendes zu kühlendes Produkt 18b ersetzt. Das bei der Entspannung entstehende Kohlendioxidgas wird mittels der Absaugeinrichtung 19 abgesaugt und ins Freie geleitet oder einer anderweitigen Nutzung zugeführt.

Mit der Vorrichtung 1 gelingt eine hocheffiziente Abgabe selbst keiner Mengen von Kohlendioxidschnee. Dabei kann eine größere Anzahl von Produkten 18a, 18b, 18c in rascher Taktfolge nacheinander mit einer genau dosierten und dabei stets gleichbleibenden Menge an Kohlendioxidschnee beaufschlagt oder Behälter damit gefüllt werden. Eine Beeinträchtigung der Funktionsfähigkeit der Vorrichtung 1 durch anbackenden Kohlendioxidschnee wird aufgrund der erfindungsgemäßen Bauart sicher vermieden.

### Bezugszeichenliste

- 1: Vorrichtung
- 2: Schneehorn
- 3: Mantelrohr
- 4: Längsachse
- 5: Entspannungskammer
- 6: Obere Stirnfläche (Schneehorn)
- 7: Entspannungsdüse
- 8: Kohlendioxidzuleitung
- 9: Mündungsöffnung
- 10: Mantelraum
- 11: Obere Stirnfläche (Mantelrohr)
- 12: Oberer Abschnitt
- 13: Mündungstrichter
- 14: Ringspalt
- 15: Austrittsmaske
- 16: Austrittsöffnung
- 17: Transporteinrichtung
- 18a, 18b, 18c: Produkt
- 19: Absaugeinrichtung
- 20: -
- 21: Phasenseparator
- 22: Druckhalteventil
- 23: Magnetventil
- 24: Steuerung
- .25: Pfeil
- 26: Schneeschicht

## Patentansprüche

1. Vorrichtung zum Dosieren von Kohlendioxidschnee, mit einem Schneehorn (2), das eine nach oben geschlossene und unterseitig an einer Mündungsöffnung (9) des Schneehorns (2) ausmündende Entspannungskammer (5) zum Entspannen von flüssigem Kohlendioxid unter Erzeugung eines Gemisches aus Kohlendioxidschnee und Kohlendioxidgas und eine im Inneren der Entspannungskammer (5) ausmündende, an eine Zuleitung (8) für flüssiges Kohlendioxid angeschlossene Entspannungsdüse (7) umfasst, wobei das Schneehorn (2) innerhalb eines nach oben geschlossenen Mantelrohrs (3) aufgenommen ist, das gegenüber der Mündungsöffnung (9) des Schneehorns (2) nach unten vorsteht, **dadurch gekennzeichnet, dass** das Mantelrohr (3) einen sich zu einer unterseitigen Austrittsöffnung (16) des Mantelrohrs (3) verjüngenden Mündungstrichter (13) aufweist.

2. Vorrichtung nach Anspruch 1, **dadurch gekennzeichnet, dass** das Innenvolumen des Mantelrohrs (3), abzüglich des vom Schneehorn (2) eingenommenen Volumens, mindestens das doppelte, bevorzugt mindestens das dreifache Volumen der Entspannungskammer (5) des Schneehorns (2) beträgt.

3. Vorrichtung nach Anspruch 1 oder 2, **dadurch gekennzeichnet, dass** der Öffnungsquerschnitt der Austrittsöffnung (16) des Mantelrohrs (3) gleich oder kleiner als der Öffnungsquerschnitt der Mündungsöffnung (9) des Schneehorns (2) ist.

4. Vorrichtung nach einem der vorhergehenden Ansprüche, **dadurch gekennzeichnet, dass** am Mündungstrichter (13) des Mantelrohrs (3) eine austauschbare Austrittsmaske (14) lösbar befestigt ist.

5. Vorrichtung nach einem der vorhergehenden Ansprüche, **dadurch gekennzeichnet, dass** der Entspannungsdüse (7) ein Phasenseparator (21) vorgeschaltet ist.

## Claims

1. Device for metering carbon dioxide snow, comprising a snow horn (2), which comprises a relaxation chamber (5), for relaxing liquid carbon dioxide while producing a mixture of carbon dioxide snow and carbon dioxide gas, which is closed towards the top and opens out on the lower side at a mouth opening (9) of the snow horn (2), and a relaxation nozzle (7) which opens out in the interior of the relaxation chamber (5) and is connected to a supply line (8) for liquid carbon dioxide,
wherein the snow horn (2) is received within a casing tube (3) which is closed towards the top and projects downwards from the mouth opening (9) of the snow horn (2), **characterized in that** the casing tube (3) has a mouth funnel (13) which tapers towards a lower-side outlet opening (16) of the casing tube (3).

2. Device according to Claim 1, **characterized in that** the internal volume of the casing tube (3), minus the volume absorbed by the snow horn (2), is at least twice, preferably at least three times, the volume of the relaxation chamber (5) of the snow horn (2).

3. Device according to Claim 1 or 2, **characterized in that** the opening cross section of the outlet opening (16) of the casing tube (3) is equal to or smaller than the opening cross section of the mouth opening (9) of the snow horn (2).

4. Device according to one of the preceding claims, **characterized in that** a replaceable outlet mask (14) is releasably attached to the mouth funnel (13) of the casing tube (3).

5. Device according to one of the preceding claims, **characterized in that** a phase separator (21) is disposed upstream of the relaxation nozzle (7).

## Revendications

1. Dispositif de dosage de neige carbonique, ayant un cornet à neige (2) qui comprend une chambre de détente (5) fermée vers le haut et débouchant du côté inférieur dans une ouverture d'embouchure (9) du cornet à neige (2) pour la détente de dioxyde de carbone liquide en produisant un mélange de neige carbonique et de dioxyde de carbone gazeux, et une buse de détente (7) débouchant à l'intérieur de la chambre de détente (5) et raccordée à une conduite d'alimentation (8) pour le dioxyde de carbone liquide,
le cornet à neige (2) étant logé à l'intérieur d'un tube d'enveloppe (3) fermé vers le haut, qui fait saillie vers le bas par rapport à l'ouverture d'embouchure (9) du cornet à neige (2), **caractérisé en ce que** le tube d'enveloppe (3) présente un entonnoir d'embouchure (13) qui se rétrécit vers une ouverture de sortie (16) située du côté inférieur du tube d'enveloppe (3).

2. Dispositif selon la revendication 1, **caractérisé en ce que** le volume intérieur du tube d'enveloppe (3), déduction faite du volume occupé par le cornet à neige (2), est au moins le double, de préférence au moins le triple du volume de la chambre de détente (5) du cornet à neige (2).

3. Dispositif selon la revendication 1 ou la revendication 2, **caractérisé en ce que** la section d'ouverture de l'ouverture de sortie (16) du tube d'enveloppe (3) est égale ou inférieure à la section d'ouverture de l'ouverture d'embouchure (9) du cornet à neige (2).

4. Dispositif selon l'une des revendications précédentes, **caractérisé en ce qu'**un masque de sortie (14) interchangeable est fixé de manière amovible sur l'entonnoir d'embouchure (13) du tube d'enveloppe (3).

5. Dispositif selon l'une des revendications précédentes, **caractérisé en ce qu'**un séparateur de phase (21) est monté en amont de la buse de détente (7).
